# EUROPÄISCHE PATENTSCHRIFT

(11) **EP 2 591 322 B1**
(45) Veröffentlichungstag und Bekanntmachung des Hinweises auf die Patenterteilung: **05.04.2017**
(21) Anmeldenummer: 11730664.7
(22) Anmeldetag: 08.07.2011
(51) Int. Cl.: G01J 3/26, G02B 26/00

(54) **ABSTIMMBARES FABRY-PÉROT-FILTER UND VERFAHREN ZU SEINER HERSTELLUNG**
TUNABLE FABRY-PEROT FILTER AND METHOD FOR PRODUCING SAME
FILTRE DE FABRY-PÉROT ACCORDABLE ET PROCÉDÉ POUR LA FABRICATION DUDIT FILTRE DE FABRY-PÉROT

(30) Priorität: 09.07.2010 DE 102010031206
(43) Veröffentlichungstag der Anmeldung: 15.05.2013
(73) Patentinhaber: Fraunhofer-Gesellschaft zur Förderung der angewandten Forschung e.V., 80686 München (DE)
(72) Erfinder: KURTH, Steffen, 09380 Thalheim (DE); HILLER, Karla, 08294 Lößnitz (DE); MEINIG, Marco, 09232 Hartmannsdorf (DE); GESSNER, Thomas, 09113 Chemnitz (DE)
(74) Vertreter: Zimmermann, Tankred Klaus
(86) Internationale Anmeldenummer: PCT/EP2011/061610
(87) Internationale Veröffentlichungsnummer: WO 2012/004379

(56) Entgegenhaltungen:
- US-A1- 2004 100 678
- US-A1- 2007 242 920

## Beschreibung

Die vorliegende Erfindung bezieht sich auf abstimmbare Fabry-Perot-Filter und Verfahren zu deren Herstellung, und insbesondere abstimmbare Fabry-Perot-Filter mit zwei beweglichen Reflektorträgern.

Viele Stoffe besitzen im infraroten Wellenlängenbereich ein charakteristisches Absorptionsspektrum. Diese Eigenschaft wird genutzt, um Stoffgemische zu analysieren oder die Konzentration von Stoffen zu bestimmen. Aufgrund der im Vergleich zu anderen Verfahren einfachen und sicheren Anwendung hat sich die Infrarotspektroskopie zu einer der wichtigsten chemischen Analysemethoden entwickelt.

Die Infrarotspektroskopie wird sowohl in chemischen Analyselaboren als auch in der Medizintechnik und in der Industrie erfolgreich eingesetzt. Beispielhaft für einen solchen Einsatz ist die Analyse von Gasen und Gasgemischen. Die Infrarotspektroskopie wird durchgerührt, indem Infrarotstrahlung durch den Probenraum mit dem zu untersuchenden Stoff oder Stoffgemisch geleitet wird. Anschließend wird die Intensität der transmittierten Strahlung in Abhängigkeit von der Wellenlänge detektiert.

Zur Wellenlängenselektion können verschiedene physikalische Verfahren eingesetzt werden. Es sind Verfahren bekannt, welche mit einem monochromatischen, jedoch in der Zentralwellenlänge abstimmbaren Laser arbeiten. Das wellenlängenselektive Element ist in diesem Fall die Strahlungsquelle. Andere Verfahren verwenden zur Wellenlängenselektion dispersive Bauelemente, wie Beugungsgitter. Diese können sowohl vor als auch nach dem Probenraum angeordnet sein. Wichtige Bauelemente sind ferner teildurchlässige Filter aus dielektrischen Schichtstapeln und Filter auf der Grundlage von Interferenz. Verschiedene Spektrometertypen unterscheiden sich in Größe, Messbereich, spektraler Auflösung, Empfindlichkeit und Konstruktionsaufwand erheblich. Die Infrarotspektroskopie ist aufgrund ihrer Vorteile auch für viele Anwendungen außerhalb des Analyselabors interessant, wofür präzise, hochauflösende und teure Laborgeräte nicht erforderlich sind. Für derartige Messaufgaben werden kleine, handliche Geräte mit einfacher, robuster Konstruktion benötigt, die schnelle Messungen in einem definierten Spektralbereich erlauben. Bisher werden hierfür meist Spektrometer eingesetzt, die als wellenlängenselektives Element Festfilteranordnungen oder Filterradkonstruktionen verwenden. Mikromechanische Filter erweitern dieses Produktsortiment um kontinuierlich abstimmbare Filter. Diese Filter setzen auf kleinstem Raum das physikalische Prinzip eines Fabry-Perot-Interferometers um.

Ein Fabry-Perot-Interferometer besteht aus zwei planparallelen hochreflektiven Spiegeln, welche in einem definierten Abstand zueinander angeordnet sind. Die Infrarotstrahlung tritt durch einen Spiegel in die Anordnung ein und wird zwischen den Spiegeln mehrfach reflektiert. Zwischen den reflektierten Teilstrahlen entsteht ein Gangunterschied, der abhängig ist von dem Abstand zwischen den Spiegeln, sowie der Wellenlänge und dem Winkel des einfallenden Strahls. Zwischen den reflektierten Teilstrahlen tritt eine Vielstrahlinterferenz auf. Strahlen mit einem Gangunterschied von λ/2 und ungeradzahligen Vielfachen davon interferieren destruktiv. Nur Wellen, die die Interferenzbedingung für konstruktive Interferenz erfüllen, werden durch das Fabry-Perot-Interferometer transmittiert. Die Interferenzbedingung für konstruktive Interferenz ist bei einem Gangunterschied von λ und Vielfachen von λ, erfüllt. Die Finesse des Transmissionsbandes wird durch den Reflexionsgrad der Spiegel bestimmt und ist ein wichtiges Gütekriterium. Spiegel mit einem hohen Reflexionsgrad können aus dielektrischen Schichtstapeln hergestellt werden. Die Lage der Zentralwellenlänge des Transmissionsbandes eines Fabry-Pérot-Filters wird u.a. vom Spiegelabstand bestimmt. Durch Änderung des Spiegelabstandes kann die Zentralwellenlänge des Fabry-Pérot-Interferometers abgestimmt werden. Das Filter weist eine Transmissionskurve mit mehreren Transmissionsbändern auf. Ein Mikrospektrometer auf Basis eines Fabry-Perot-Interferometers besteht somit in der Grundausführung aus einem solchen schmalbandigen, abstimmbaren Filter, einem Bandpassfilter und einem Strahlungsdetektor. Das Bandpassfilter blockt die transmittierte Strahlung der ungenutzten Interferenzordnungen.

Zur Herstellung von Fabry-Pérot-Filtern sind verschiedene mikromechanische Prozesse und Herstellungsverfahren bekannt.

Techniken zur Herstellung von Fabry-Pérot-Filtern in Oberflächenmikromechanik sind in der EP 0668409 B1 und der US 5646729 beschrieben. Auf einem Trägersubstrat aus Silizium werden abwechselnd Schichten aus Polysilizium und Siliziumdioxid abgeschieden. Der Schichtstapel beinhaltet zusätzlich eine Opferschicht aus Siliziumdioxid, welche in einem der Prozessschritte entfernt wird. Somit wird gemäß diesen Schriften ein optischer Resonator eines Fabry-Perot-Filters durch den beim Entfernen einer Opferschicht zwischen einem beweglichen Spiegel und einem Substrat, auf dem ein stationärer Spiegel angeordnet ist, entstehenden Hohlraum gebildet. Die Spiegel sind aus den dielektrischen Polysilizium-und Siliziumdioxidschichten beidseitig des Resonators gebildet. Die Schichtstapel beinhalten dotierte, elektrisch leitfähige Gebiete als Elektroden zur Auslenkung der Membran.

Nachteilig an Fabry-Pérot-Filtern in Oberflächenmikromechanik ist vor allem der durch die eingesetzte Opferschichttechnologie begrenzte Abstand zwischen den Spiegeln. Zur Konstruktion von Fabry-Pérot-Filtern für einen Wellenlängenbereich größer 8 µm ist dieser nicht ausreichend. Aus dielektrischen Schichten mit Polysilizium und Siliziumdioxid lassen sich keine Spiegel für Wellenlängen im mittleren Infrarotbereich größer 8 µm herstellen. Die in der EP 0668409 B1 und der US 5646729 beschriebenen Filter in Oberflächentechnologie erlauben nur einen geringen Durchmesser der optischen Fläche. Dieser ist für viele Anwendungen in der Gasanalyse, wo ein hohes Signal-zu-Rausch-Verhältnis erforderlich ist, nicht ausreichend. Ferner existiert eine begrenzte Materialauswahl für die Reflektoren.

Techniken zum Implementieren von Fabry-Perot-Resonatoren mit einer beweglichen Membran sind in der US 6608711 B1, der US 6424466 B1 und der US 6341039 B1 beschrieben. Gemäß diesen Schriften ist ein beweglicher Spiegel einer Fabry-Perot-Filteranordnung durch eine dünne Membran implementiert, wobei sich zwischen Membran und Wafer ein Oxid als Opferschicht befindet. Die Dicke dieses Oxids kann nicht beliebig vergrößert werden. Oxid bestimmt unter anderem den Elektrodenabstand. Größere Nachteile sind Verwölbung der dünnen Membranen, Federn und Membranen haben die gleiche Dicke. Durch die leichte Verwölbung existiert eine begrenzte Auswahl an Schichtmaterialien.

Techniken zur Herstellung eines beweglichen Reflektorträgers für Fabry-Perot-Filter in Volumen-Mikromechanik (Bulk-Mikromechanik) sind in der DE 10226305 C1 und der EP 1882917 B1 beschrieben. Gemäß diesen Schriften wird ein abstimmbares Fabry-Perot-Filter mit einem beweglichen Reflektorträger in Volumenmikromechanik hergestellt. Der Reflektorträger wird durch nass- und trockenchemische Ätzprozesse aus Siliziumwafern hergestellt, wobei die gesamte Dicke des Wafers zur Strukturierung genutzt wird. Hierbei können weitaus größere Resonatorspalte hergestellt werden als mit Technologien der Oberflächenmikromechanik. Bei derartigen Filtern ist eine mechanische Struktur und mikrotechnologische Prozessierung des Wafers wichtig, welche in einer geringen Oberflächenverwölbung resultieren. Die gebondeten Fabry-Perot-Filter müssen zudem eine geringe Verkippung zueinander aufweisen. Eine Verwölbung der Resonatoren, sowie eine Verkippung der Reflektoren zueinander verändern die Form der Transmissionskurve des Fabry-Perot-Filters. Ferner ist bei derartigen Filtern das Problem der Auslenkung im Schwerefeld und bei Vibrationen nicht gelöst. Um eine niedrige Auslenkung im Schwerefeld zu erreichen, sind steife Federn erforderlich. Bei konstanter Elektrodenfläche erhöht dies die Anregungsspannung erheblich.

Schließlich ist aus der US 7420738 B2 eine Technik zur Implementierung eines Fabry-Perot-Filters unter Verwendung von zwei beweglichen Membranen bekannt. Die in der US 7420738 B2 beschriebene Anordnung besteht im Wesentlichen aus zwei durch einen Abstandhalter verbundenen Membrananordnungen, wie sie in der US 6608711 B2 beschrieben sind. Gemäß der US 7420738 B2 sind somit die beiden Membrane typischerweise den Kräften aus Schwerefeld, Vibrationen und Schock ausgesetzt, die jedoch wegen der verhältnismäßig kleinen Masse solcher Membranen entsprechend wenig zusätzliche und ungewollte Bewegung verursachen. Der Abstimmbereich ist verdoppelt durch die getrennte Auslenkung beider Membranen. Ein wesentlicher Nachteil der Ausführung mit dünnen Membranen besteht darin, dass diese bei der Auslenkung zur Abstimmung der Durchlasswellenlänge verkrümmt werden, was die Finesse stark verringert.
Die der vorliegenden Erfindung zugrundeliegende Aufgabe besteht darin, ein abstimmbares Fabry-Perot-Filter und ein Verfahren zu dessen Herstellung zu schaffen, die in einfacher Weise neben einem großen Abstimmbereich eine hohe Finesse ermöglichen.
Diese Aufgabe wird durch ein abstimmbares Fabry-Perot-Filter gemäß Anspruch 1 sowie ein Verfahren zum Herstellen eines abstimmbaren Fabry-Perot-Filters nach Anspruch 19 gelöst. Ausführungsbeispiele offenbaren ein abstimmbares Fabry-Perot-Filter mit folgenden Merkmalen:
einem ersten Teil, das einen ersten Reflektorträger mit einem ersten Reflektor und einen ersten Trägerrahmen, an dem der erste Reflektorträger federnd gelagert ist, aufweist;
einem zweiten Teil, das einen zweiten Reflektorträger mit einem zweiten Reflektor und einen zweiten Trägerrahmen, an dem der zweite Reflektorträger federnd gelagert ist, aufweist,
wobei das erste Teil und das zweite Teil derart miteinander verbunden sind, dass sich der erste Reflektor und der zweite Reflektor gegenüberliegen, und dass ein Abstand zwischen dem ersten Reflektor und dem zweiten Reflektor veränderlich ist,
wobei der erste Reflektorträger und der zweite Reflektorträger jeweils eine längliche Form aufweisen und in einem Winkel zueinander angeordnet sind, so dass sich in einem Bereich, in dem die länglichen Reflektorträger überlappen, die Reflektoren gegenüberliegen,
wobei Bereiche des ersten Reflektorträgers Bereichen des zweiten Trägerrahmens gegenüberliegen und wobei Bereiche des zweiten Reflektorträgers Bereichen des ersten Trägerrahmens gegenüberliegen.

Ausführungsbeispiele der Erfindung schaffen ferner ein Verfahren zum Herstellen eines abstimmbaren Fabry-Perot-Filters mit folgenden Schritten:
Strukturieren einer ersten Schicht zum Erzeugen eines ersten Teils, das einen ersten länglichen Reflektorträger, der an einem ersten Trägerrahmen federnd gelagert ist, aufweist;
Strukturieren einer zweiten Schicht zum Erzeugen eines zweiten Teils, das einen zweiten länglichen Reflektorträger, der an einem zweiten Trägerrahmen federnd gelagert ist, aufweist;
Aufbringen eines ersten Reflektors auf den ersten Reflektorträger;
Aufbringen eines zweiten Reflektors auf den zweiten Reflektorträger;

Verbinden des ersten Teils und des zweiten Teils mittels des ersten und des zweiten Trägerrahmens derart, dass der erste und der zweite längliche Reflektorträger in einem Winkel zueinander angeordnet sind, und dass sich in einem Bereich, in dem der erste und der zweite Reflektorträger überlappen, die Reflektoren gegenüberliegen.

Bei den Ausführungsbeispielen weisen somit ein erster Reflektorträger und ein zweiter Reflektorträger jeweils eine längliche Form auf und sind in einem Winkel zueinander angeordnet, so dass durch eine entsprechende Betätigung, beispielsweise mittels einer elektrostatischen Anziehung, ein großer Abstimmbereich, d. h. eine große Änderung des Abstandes zwischen den Reflektoren, implementiert werden kann. Ein solcher Aufbau ermöglicht bei Ausführungsbeispielen der Erfindung ferner eine Implementierung der Reflektorträger in Volumenmikromechanik, bei der Reflektorträger, Trägerrahmen und Federelemente zur federnden Lagerung des Reflektorträgers an dem Trägerrahmen in einer Halbleiterschicht, beispielsweise einer Siliziumschicht, strukturiert sein können. Eine Dicke der Reflektorträger kann dabei mindestens 100 µm, mindestens 200 µm oder mindestens 280 µm betragen, so dass eine Verwölbung bei einer Auslenkung reduziert oder vermieden werden kann, was die Finesse stark erhöhen kann.

Durch die längliche Form der Reflektorträger und die Anordnung derselben in einem Winkel zueinander liegen bei Ausführungsbeispielen der Erfindung Bereiche des Reflektorträgers eines Teils Bereichen des Trägerrahmens des anderen Teils gegenüber. Dies ermöglicht auf vorteilhafte Weise das Erzeugen einer elektrostatischen Anziehung zwischen den sich gegenüberliegenden Bereichen, um dadurch den Abstand zwischen den Reflektoren zu verringern. Ferner können solche sich gegenüberliegenden Bereichen eine viskose Dämpfung unterstützen.

Bei Ausführungsbeispielen der Erfindung können die länglichen Reflektorträger derart relativ zueinander angeordnet sein, dass ein zentraler Bereich des ersten Reflektorträgers einen zentralen Bereich des zweiten Reflektorträgers überlappt, während Bereiche auf beiden Seiten der zentralen Bereiche der Reflektorträger jeweils Bereichen der Trägerrahmen gegenüberliegen. Bei Ausführungsbeispielen können die Reflektorträger eine allgemein rechteckige Form aufweisen, wobei eine Länge der Reflektorträger mindestens doppelt so groß sein kann wie eine Breite derselben.

Bei Ausführungsbeispielen der Erfindung können das erste Teil und das zweite Teil aus einem leitfähigen Material bestehen, wobei eine Betätigungsspannung um eine elektrostatische Anziehung zu bewirken, zwischen dem ersten Teil und dem zweiten Teil angelegt werden kann. Bei alternativen Ausführungsbeispielen können Elektroden auf dem Trägerrahmen und/oder dem Reflektorträger vorgesehen sein, um eine entsprechende Betätigung zu bewirken.

Ausführungsbeispiele der vorliegenden Erfindung ermöglichen somit die Konstruktion eines mikromechanischen Systems, in das dielektrische Schichtstapel als hochreflektierende Spiegel bzw. Reflektoren derart integriert werden können, dass sie ein Fabry-Perot-Interferometer bilden. Die Reflektoren können dabei auf bekannte Weise beispielsweise als Bragg-Reflektoren ausgebildet sein.

Bei Ausführungsbeispielen der Erfindung sind die Reflektorträger in Volumen-Mikromechaniken gebildet, so dass eine hohe Parallelität der Spiegel sowie eine geringe Verkrümmung der Spiegel im ausgelenkten Zustand implementiert werden kann. Somit können technische Herausforderungen, wie Zentralwellenlänge, Finesse, Halbwärtsbreite und Maximaltransmission eines Fabry-Perot-Filters ohne weiteres erfüllt werden. Ausführungsbeispiele der Erfindung sind somit derart gestaltet, dass sowohl eine Verkippung als auch eine Verkrümmung minimal sind.

Ausführungsbeispiele des abstimmbaren Fabry-Perot-Filters umfassen zwei Reflektorträger, die jeweils federnd an einem Trägerrahmen gelagert sind. Somit können Ausführungsbeispiele der Erfindung an das dynamische Verhalten eines Fabry-Pérot-Filters gestellte Anforderungen erfüllen. Insbesondere beeinflussen die Gravitationskraft und Kräfte aus Vibrationen und Stößen den Spiegelabstand nicht, so dass auch unter verschiedenen dynamischen und statischen Belastungen, wie sie beispielsweise beim mobilen Einsatz eines Spektrometers auftreten, genaue Messergebnisse erhalten werden können.

Bei Ausführungsbeispielen der Erfindung ist der Entwurf des mikromechanischen Systems derart, dass verschiedene dielektrische Schichtstapel, für verschiedene Wellenlängenbereiche, als Reflektoren auf die jeweiligen Reflektorträger aufgebracht werden können. Bei Ausführungsbeispielen der Erfindung ist der Entwurf derart, dass Schichtstapel verschiedener Dicke auf den Reflektorträgern abgeschieden werden können, ohne die elektrische und mechanische Funktion zu verändern.

Bei Ausführungsbeispielen der Erfindung ist das abstimmbare Fabry-Perot-Filter ausgelegt, um eine Verstellung des Spiegelabstandes um mindestens 1600 nm zu ermöglichen. Somit kann ein großer freier Spektralbereich, der besonders im Wellenlängenbereich über 8 µm unter Nutzung der ersten Interferenzordnung verfügbar ist, zum Durchstimmen des Filters genutzt werden. Ausführungsbeispiele der Erfindung ermöglichen kleine, robuste und schnelle Fabry-Perot-Filter, die mit geringem technologischem Aufwand herstellbar sind, so dass sich ein großer Anwendungsbereich erschließt.

Bei Ausführungsbeispielen der Erfindung sind Anschläge vorgesehen, die eine Bewegung der Reflektorträger in der Ebene der Schicht, in der sie gebildet sind, beschränken, so dass das Filter robust gegenüber Schockbelastungen ist, wie sie beispielsweise beim Transport von mobilen Geräten auftreten können. Bei Ausführungsbeispielen der Erfindung sind die Anschläge elastisch ausgebildet.

Ausführungsbeispiele der Erfindung ermöglichen somit die Erzeugung einer mikromechanischen Struktur für eine Fabry-Perot-Filteranordnung, die einen Spiegelabstand von mindestens 5000 nm aufweisen kann, die einen Spannungsbedarf von kleiner 50 Volt besitzen kann, deren Abstimmbereich mechanisch mindestens 1600 nm betragen kann, die unempfindlich gegenüber einer Drehung im Schwerefeld ist, die unempfindlich gegenüber Vibrationen ist, und die eine geringe Verwölbung der Reflektorträger und eine geringe Verkippung derselben zueinander ermöglicht.

Bei Ausführungsbeispielen der Erfindung werden die Reflektorträger in Volumen-Mikromechanik gefertigt, was gegenüber einer Ausführung derselben als dünne Membrane eine Verwölbung bei Auslenkung stark reduziert, was die Finesse des Fabry-Pérot-Filters stark erhöht. Bei Ausführungsbeispielen werden die Reflektorträger, die Trägerrahmen und Federelemente, mittels derer die Reflektorträger an dem Trägerrahmen federnd gelagert sind, durch Volumen-mikromechanische Schritte in einer ersten Schicht und in einer zweiten Schicht, die beispielsweise Siliziumschichten sein können, gebildet, so dass eine mechanische Struktur unter Verwendung einer mikrotechnologischen Prozessierung von Wafern erzeugt werden kann, die eine geringe Oberflächenverwölbung auch bei Auslenkung zur Folge hat. Die strukturierten Schichten werden nachfolgend miteinander verbunden, beispielsweise unter Verwendung von Wafer-Bonden, so dass nach dem Boden die Reflektoren des Fabry-Perot-Filters eine geringe Verkippung zueinander aufweisen können. Somit ermöglichen Ausführungsbeispiele der Erfindung die Implementierung einer gewünschten Form der Transmissionskurve des Fabry-Perot-Filters. Da bei Ausführungsbeispielen der Erfindung zwei längliche Reflektorträger federnd gelagert und somit beweglich sind, können Probleme einer Auslenkung im Schwerefeld und bei Vibrationen beseitigt sein. Ausführungsbeispiele der Erfindung ermöglichen dies bei deutlich geringeren Anregungsspannungen als sie (bei konstanter Elektronenfläche) bei nur einem beweglichen Spiegel erforderlich wären, bei dem, um eine niedrige Auslenkung im Schwerfeld zu erreichen, steife Federn erforderlich sind.

Bevorzugte Ausführungsbeispiele der Erfindung werden nachfolgend bezugnehmend auf die beiliegenden Zeichnungen näher erläutert. Es zeigen:
- Fig. 1: eine schematische Draufsicht auf ein erstes Ausführungsbeispiel eines erfindungsgemäßen Fabry-Pérot-Filters;
- Fig. 2: eine schematische Querschnittansicht des in Fig. 1 gezeigten Ausführungsbeispiels entlang der Linie II-II in Fig. 1;
- Fig. 3: eine schematische Draufsicht eines weiteren Ausführungsbeispiels eines erfindungsgemäßen Fabry-Perot-Filters; und
- Fig. 4: eine schematische Querschnittansicht des in Fig. 3 gezeigten Ausführungsbeispiels entlang der Line IV-IV in Fig. 3.

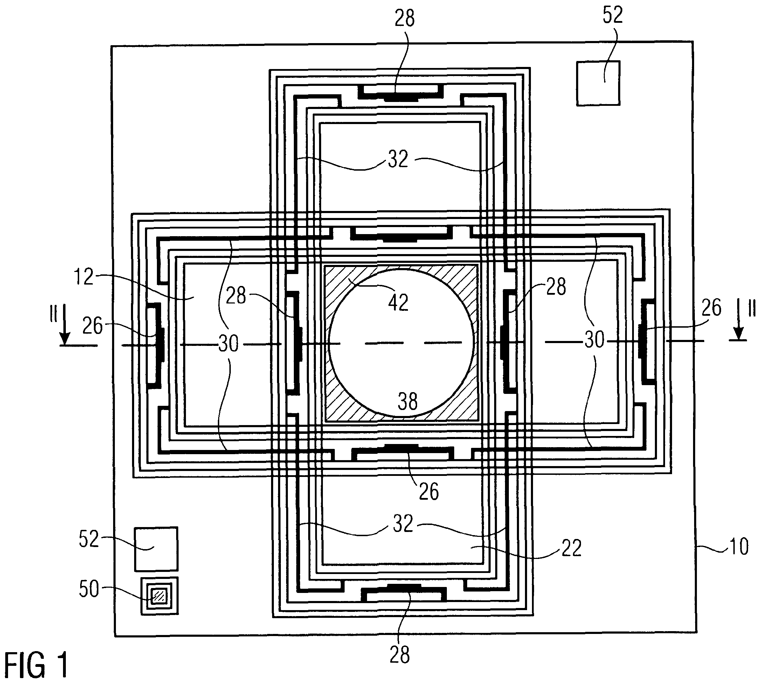

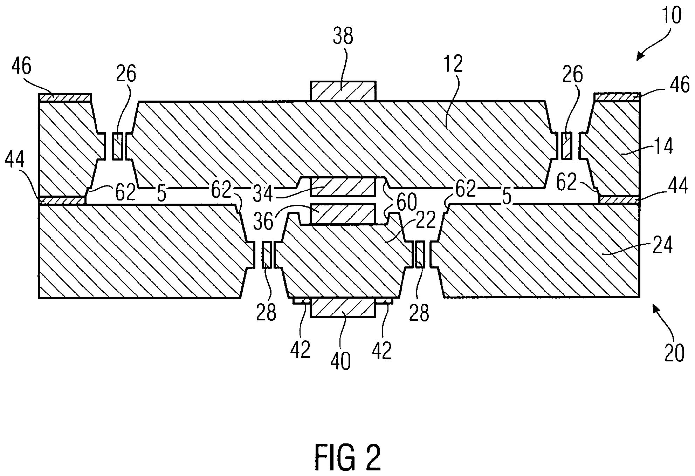

Fig. 1 zeigt eine schematische Draufsicht auf ein Ausführungsbeispiel eines Fabry-Perot-Filters, das ein erstes Teil 10, das strukturiert ist, um einen ersten Reflektorträger 12 und einen ersten Trägerrahmen 14, an dem der erste Reflektorträger 12 federnd gelagert ist, zu definieren. Bei dem gezeigten Ausführungsbeispiel ist das erste Teil 10 durch eine strukturiert Siliziumschicht implementiert. Das Fabry-Perot-Filter weist ferner ein zweites Teil 20 (Fig. 2) auf, das bei dem gezeigten Ausführungsbeispiel wiederum eine strukturierte Siliziumschicht ist. Zu Darstellungszwecken ist das erste Teil 10 zumindest teilweise durchsichtig dargestellt, so dass Strukturen in dem darunter liegenden zweiten Teil 20 erkennbar sind. Das zweite Teil 20 ist strukturiert, um einen zweiten Reflektorträger 22 und einen zweiten Trägerrahmen 24 zu definieren.

Das erste Teil 10 ist ferner strukturiert, um Anschläge 26 aufzuweisen, die eine laterale Bewegung des ersten Reflektorträgers 10 in der Ebene des erste Teils 10 beschränken. Auf ähnliche Weise ist das zweite Teil 20 strukturiert, um Anschläge 28 aufzuweisen, die eine laterale Bewegung des zweiten Reflektorträgers 22 in der Ebene des zweiten Teils 20 beschränken. Der Umfang des ersten Reflektorträgers 12 und des zweiten Reflektorträgers 22 sind in der Projektion rechteckförmig. Bei dem gezeigten Ausführungsbeispiel ist an jeder Seite der rechteckförmigen Reflektorträger 12 bzw. 22 ein Anschlag 26 bzw. 28 vorgesehen.

Der erste Reflektorträger 12 ist über Federelemente 30 federnd an dem ersten Trägerrahmen 14 gelagert. Der zweite Reflektorträger 22 ist über Federelemente 32 federnd an dem zweiten Trägerrahmen 24 gelagert. Ein erster Reflektor 34 ist auf einer dem zweiten Teil 20 zugewandten Seite des ersten Reflektorträgers 12 angeordnet, und ein zweiter Reflektor 36 ist auf einer dem ersten Teil 10 zugewandten Seite des zweiten Reflektorträgers 22 angeordnet. Der Abstand der Reflektoren 34 und 36 voneinander ist erheblich für die Wellenlänge des Durchlassbereichs des Fabry-Perot-Filters, so dass die Transmissionswellenlänge über eine Einstellung des Abstands zwischen den Reflektoren 34 und 36 abstimmbar ist.

Gegenüber dem ersten Reflektor 34 ist auf der dem zweiten Teil 20 abgewandten Seite des ersten Reflektorträgers 12 eine erste Antireflexionsschicht 38 vorgesehen. Gegenüber dem zweiten Reflektor 36 ist auf der dem ersten Teil 10 abgewandten Seite des zweiten Reflektorträgers 20 eine zweite Antireflexionsschicht 40 vorgesehen. Bei dem gezeigten Beispiel ist die Antireflexionsschicht 40 von einer Blende 42 umgeben. Die Reflektoren 34, 36 und die Antireflexionsschichten 38 und 40 können beispielsweise eine runde Form aufweisen und auf herkömmliche Weise unter Verwendung dielektrischer Schichtstapel gefertigt sein. Alternativ können die Reflektoren und Antireflexionsschichten eine beliebige andere Form, wie z.B. quadratisch, aufweisen. Die Reflektoren können ausgebildet sein, um den überlappenden Bereich der Reflektorträger mehrheitlich zu bedecken.

Wie in Fig. 2 zu erkennen ist, sind das erste Teil und das zweite Teil 20 über die Trägerrahmen 14 und 24 derart miteinander verbunden, dass sich der erste Reflektor 34 und der zweite Reflektor 36 gegenüberliegen. Beispielsweise können das erste Teil 10 und das zweite Teil 20 über eine Siliziumdioxidschicht 44 miteinander verbunden sein. Eine weitere Siliziumdioxidschicht 46 kann auf der von dem zweiten Teil 20 abgewandten Oberfläche des ersten Trägerrahmens 14 gebildet sein. In gleicher Weise könnte eine weitere Siliziumdioxidschicht auf der von dem ersten Teil 10 abgewandten Oberfläche des zweiten Trägerrahmens 24 gebildet sein.

In dem ersten Teil 10 kann eine Öffnung 50 vorgesehen sein, durch die eine Kontaktierung des zweiten Teils 20 erfolgen kann. Ferner können ein oder mehrere Anschlusselemente 52 vorgesehen sein, über die eine Kontaktierung des ersten Teils erfolgen kann.

Durch Anlegen einer Ansteuerspannung zwischen dem ersten Teil 10 und dem zweiten Teil 20 (über die Öffnung 50 sowie die Anschlussflächen 52) kann eine elektrostatische Anziehung derart bewirkt werden, dass sich ein Abstand zwischen den überlappenden Bereichen des ersten Reflektorträgers 12 und des zweiten Reflektorträgers 22 verringert. Eine solche elektrostatische Anziehung kann insbesondere zwischen sich gegenüberliegenden Bereichen der Reflektoren 34, 36 und ferner zwischen den Bereichen von Reflektorträgern 12, 22 und Trägerrahmen 14, 24, die sich gegenüberliegen, wie durch einen Spalt s in Fig. 2 angedeutet ist, stattfinden. Somit ist der Abstand zwischen den Reflektoren 34 und 36 und somit die Transmissionswellenlänge des Fabry-Perot-Filters einstellbar.

Um ein Abscheiden ausreichend dicker Schichtstapel als Reflektoren 34 und 36 zu ermöglichen, weisen bei dem gezeigten Ausführungsbeispiel der erste Reflektorträger 12 und der zweite Reflektorträger 22 Ausnehmungen 60 in den überlappenden Abschnitten derselben auf. Die Reflektoren 34 und 36 sind durch Schichtstapel in diesen Ausnehmungen 60 gebildet. Ferner ist bei dem gezeigten Ausführungsbeispiel die Dicke der ersten und der zweiten Reflektorträger 12, 22 etwas geringer als die Dicke des ersten und des zweiten Trägerrahmens 14, 24, was durch entsprechendes Ätzen der Oberflächen realisiert werden kann, wie durch Vorsprünge 62 in Fig. 2 angedeutet ist.

Die Schichten, in denen das erste Teil 10 und das zweite Teil 20 strukturiert sind, können beispielsweise durch 300 µm dicke Wafer gebildet sein, so dass die Dicke des ersten und zweiten Reflektorträgers 12, 22 etwas geringer als 300 µm, beispielsweise 280 µm ist. Wie in Fig. 2 zu erkennen ist, sind der erste Reflektorträger 12 und der zweite Reflektorträger 22 in Volumenmikromechanik gefertigte Trägerstrukturen. Dicke Reflektorträger sind biegesteif und verhindern eine Verkrümmung der Spiegel 34, 36 im ausgelenkten Zustand. Beide Reflektorträger 12, 22 sind beweglich ausgeführt und an elastischen Siliziumfedern 30, 32 aufgehängt. Ferner sind beide Träger symmetrisch zueinander gestaltet und sind bei dem gezeigten Ausführungsbeispiel in einem Winkel von 90° zueinander angeordnet. Die Federn 30 bzw. 32 wirken im Schwerpunkt der Reflektorträger 12 bzw. 22 und besitzen für den ersten Reflektorträger 12 und den zweiten Reflektorträger 22 die gleiche Federsteifigkeit. Durch diese Gestaltung beeinflussen Kräfte, die auf beide Reflektorträger 12, 22 gleichsinnig wirken, den Spiegelabstand und folglich die Zentralwellenlänge nicht. Beide Reflektoren 34, 36 werden durch Kräfte aus Gravitation, Vibration und Schock gleichermaßen ausgelenkt. Die Federsteifigkeit kann somit gegenüber einem Entwurf mit nur einem beweglichen Reflektorträger erheblich reduziert werden.

Wie ausgeführt wurde, erfolgt die gegenseitige Verstellung der Reflektorträger 12, 22 elektrostatisch. Die durch die Federelemente 30, 32 erzeugte Federkraft bildet die rückstellende Kraft zur elektrostatischen Kraft. Vergleichsweise zu einem Entwurf mit nur einem beweglichen Reflektorträger können rückstellende Federn mit einer wesentlich geringeren Federsteifigkeit eingesetzt werden. Das führt bei gleicher Elektrodenfläche zu einer niedrigeren maximal erforderlichen Ansteuerspannung.

Wie oben ausgeführt wurde, können die dielektrischen Schichtstapel, die die Reflektoren 34, 36 bilden, in Ausnehmungen 60, die nasschemisch geätzte Gruben darstellen können, abgeschieden werden. Aufgrund der dicken Reflektorträger 12, 22 kann die Dicke der dielektrischen Stapel, die die Reflektoren 34, 36 bilden, in einem weiten Bereich variieren, wodurch verhältnismäßig leicht unterschiedlich zusammengesetzte Reflektorstapel ohne wesentliche Designänderungen der Reflektorträger 12, 22 einsetzbar sind.

Die Reflektorträger 12, 22 weisen in Projektion eine rechteckige Form auf und sind in einem Winkel von 90° zueinander angeordnet. Bei alternativen Ausführungsbeispielen können die Reflektorträger in einem von 90° verschiedenen Winkel, beispielsweise einem Winkel zwischen 70° und 110° zueinander angeordnet sein. Dadurch überlappen die Reflektorträger 12, 22 mit dem jeweils gegenüberliegenden Trägerrahmen 22, 24, so dass an den sich überlappenden Gebieten eine viskose Dämpfung auftreten kann. Bei einer mechanischen Schockbelastung wird durch diese viskose Dämpfungskraft die Bewegung der Reflektorträger 12, 22 gebremst und die Auslenkung der Federelemente 30, 32 begrenzt. Die mikromechanische Struktur wird somit deutlich unempfindlicher gegenüber Schockbelastungen.

Eine Auslenkung der Reflektorträger 12, 22 durch Schockbelastungen in der Ebene der Schichten, in denen die Strukturen gebildet sind, also der Chipebene, wird, wie oben bereits ausgeführt, durch mechanische Anschläge 26 bzw. 28 eingeschränkt. Die Anschläge 26 bzw. 28 sind so dimensioniert, dass sie die Bewegung der Reflektorträger stoppen, bevor kritische Auslenkungen und somit Belastungen auftreten können. Die Reflektorträger 12, 22 werden somit wirksam geschützt. Bei Ausführungsbeispielen der Erfindung können die Anschläge ferner elastisch ausgeführt sein, um kurzzeitig Energie durch elastische Verformung aufnehmen zu können.

Die Federelemente 30, 32 sind bei dem gezeigten Ausführungsbeispiel meanderförmig um die Ecken der Reflektorträger 12, 22 herumgeführt, so dass sie eine Bewegung der Reflektorträger 12, 22 in alle Raumrichtungen ermöglichen. Vier Federelemente 30, 32 sind entsprechend für jeden Reflektorträger 12, 22 vorgesehen. Die Federelemente 30, 32 können sowohl auf Biegung als auch auf Torsion belastet werden. Die Federelement können mittels einer Kombination aus nass- und trockenchemischen Ätzprozessen gefertigt werden. Zuerst kann die Federdicke mittels eines nasschemischen Ätzprozesses sehr genau eingestellt werden. Anschließend kann die Federbreite und -form durch einen Trockenätzprozess strukturiert werden.

Die gezeigte Blende 42 kann beispielsweise aus Aluminium gefertigt werden und legt den Einfall/Ausfallbereich eines Lichtstrahls durch die Antireflexionsschicht 40 fest. Ein Lichteintritt in das bzw. ein Lichtaustritt aus dem Fabry-Perot-Filter kann durch entweder die erste Antireflexionsschicht 38 oder die zweite Antireflexionsschicht 40 stattfinden.

Bei Ausführungsbeispielen der Erfindung sind das erste Teil 10 und das zweite Teil 20 Silizium-Wafer bzw. Silizium-Substrate, die durch Silizium-Direktbonden miteinander verbunden sein können, wobei zwischen denselben zur Isolation die Siliziumdioxidschicht 24 angeordnet sein kann. Diese Oxidschicht kann symmetrisch ausgeführt sein, das heißt auf allen Seiten der Reflektorträger gleich dick, um Spannungen in den Trägerrahmen 14, 24 zu reduzieren und eine Verwölbung oder Verkippung der Reflektorträger 12, 22 zu vermeiden. Die Anschlusskontakte bzw. Anschlussflächen 52 des ersten Teils 10 und ein unter der Öffnung 50 angeordneter Anschlusskontakt des zweiten Teils 20 können aus Aluminium gebildet sein, wobei zur Verbesserung eines Substratkontaktes das Siliziumsubstrat unter den Anschlusskontakten dotiert sein kann.

Bei dem in den Fig. 1 und 2 gezeigten Ausführungsbeispiel erfolgt die elektrostatische Anregung zwischen den gegenüberliegenden Abschnitten der Reflektorträger 12 und 22, sowie zwischen den gegenüberliegenden Abschnitten der Reflektorträger 12, 22 und der Rahmenträger 14, 24. Dabei können die Spiegel 34, 36 in die Anregung einbezogen werden, indem die oberste Schicht der Spiegel aus einem leitfähigen Material, wie z. B. Germanium, ausgeführt ist, das über alle dielektrischen Schichten mit den Reflektorträgern 12, 22 leitfähig verbunden ist. Durch diese Variante der Anregung wird der Aufbau des Fabry-Perot-Filters besonders einfach.

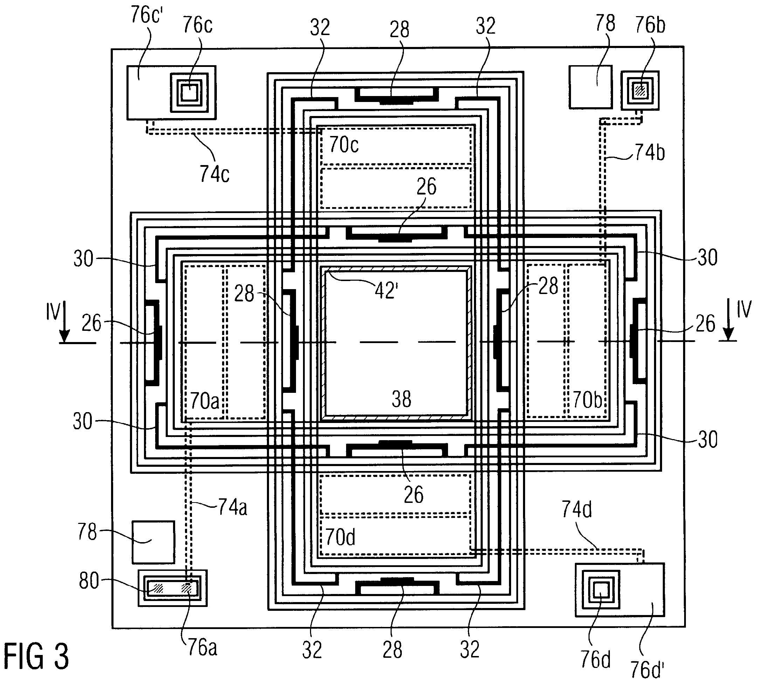

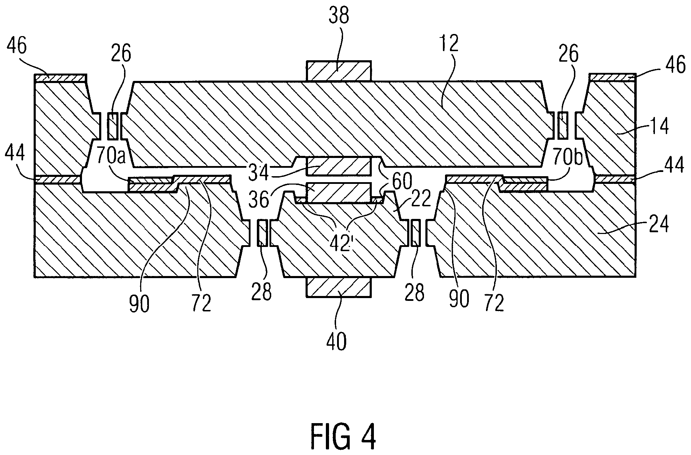

Ein alternatives Ausführungsbeispiel eines erfindungsgemäßen Fabry-Perot-Filters, das sich insbesondere hinsichtlich der Form der Anregung von dem bezugnehmend auf die Fig. 1 und 2 beschriebenen Ausführungsbeispiel unterscheidet, wird nachfolgend bezugnehmend auf die Fig. 3 und 4 erläutert. Gleiche oder gleich wirkende Elemente sind dabei mit gleichen Bezugszeichen bezeichnet, wobei eine nochmalige Erläuterung entsprechender Elemente, wo nicht erforderlich, weggelassen wird. Das erste bzw. obere Teil ist in Fig. 3 wiederum zu Darstellungszwecken zumindest teilweise transparent. Das in den Fig. 3 und 4 gezeigte Ausführungsbeispiel unterscheidet sich von dem in den Fig. 1 und 2 gezeigten Ausführungsbeispielen, insbesondere durch die Art der Anregung. Ferner ist statt einer Blende mit kreisförmiger Apertur eine Blende 42' mit quadratischer Apertur vorgesehen, die den Reflektor 36 umgibt. Schließlich sind gemäß dem in den Fig. 3 und 4 gezeigten Ausführungsbeispiel zusätzliche Dämpfungselemente implementiert, wie nachfolgend näher erläutert wird.

Bei dem in den Fig. 3 und 4 gezeigten Ausführungsbeispiel findet der Eintrag der elektrostatischen Kräfte zur Variation der Durchlasswellenlänge über zusätzliche Elektroden 70a, 70b, 70c, 70d statt, die auf den ersten und zweiten Trägerrahmen 14 und 24 gebildet sind. Bei alternativen Ausführungsbeispielen können Elektroden auf den Reflektorträgern 12 und 22 oder auf den Trägerrahmen 14, 24 und Reflektorträgern 12, 22 vorgesehen sein. Die Elektroden 70a bis 70d können über eine dielektrische Schicht 72, beispielsweise eine Siliziumoxidschicht, von dem Trägerrahmen, auf dem sie angeordnet sind, isoliert sein. Die Elektroden 70a bis 70d können beispielsweise aus Aluminium hergestellt sein. Die Elektroden 70a bis 70d sind über Anschlussleitungen 74a bis 74d separat ansteuerbar. Eine elektrostatische Anziehung findet hier insbesondere zwischen sich überlappenden Bereichen der Elektroden 70a bis 70d und des gegenüberliegenden Reflektorträgers 12, 22 statt. Die Elektroden 70a und 70b des ersten Trägerrahmens sind über Durchkontaktierungen 76a und 76b angeschlossen. Die Elektroden 70c und 70d des zweiten Trägerrahmens 24 sind über Öffnungen 76c und 76d angeschlossen. Die Öffnungen 76c und 76d können als Durchkontaktierungen mit entsprechenden Kontaktflächen 76c' und 76d' ausgebildet sein. Der erste Trägerrahmen 14 und damit der erste Reflektorträger 12 können über Anschlusskontakte 78 angeschlossen sein, während der zweite Trägerrahmen 24 und somit der zweite Reflektorträger 22 über eine Kontaktierung 80 angeschlossen sein kann.

Es sei an dieser Stelle angemerkt, dass bezugnehmend auf Fig. 3 Anschlusskontakte schematisch dargestellt und beschrieben wurden, wobei für einen Fachmann offensichtlich ist, dass die Anschlusskontakte auf beliebige Weise und in beliebiger Anordnung ausgebildet sein können, um das Anlegen entsprechender Spannungen zwischen den Elektroden 70a bis 70d und den gegenüberliegenden Abschnitten des jeweiligen Reflektorträgers anlegen zu können. Bei Ausführungsbeispielen können alle Kontaktlöcher symmetrisch über den Chip verteilt sein, um Spannungen im Chip zu vermeiden. Bei dem in den Fig. 3 und 4 dargestellten Ausführungsbeispiel werden die Reflektoren, d.h. Spiegel 34 und 36 nicht zur Betätigung genutzt, so dass der Schichtaufbau derselben keine leitfähige Schicht umfassen muss. Bei alternativen Ausführungsbeispielen können sowohl Elektroden als auch die Spiegel zur Anregung genutzt werden.

Wie in Fig. 4 zu sehen ist, weist der zweite Trägerrahmen 24 Erhöhungen 90 auf, über die sich die dielektrische Schicht 72 erstreckt. Der erste Trägerrahmen 14 weist entsprechende Erhöhungen, nicht dargestellt auf, wobei der erste und der zweite Trägerrahmen diesbezüglich symmetrisch ausgeführt sind. Diese Erhöhungen 90 mit der darauf angeordneten dielektrischen Schicht 72 stellen zusätzliche Dämpfungsflächen dar, wobei der Abstand der Dämpfungsflächen zum jeweils gegenüberliegenden Reflektorträger 12, 22 beliebig eingestellt werden kann, da die Dämpfungsflächen bei diesem Ausführungsbeispiel nicht zur Betätigung beitragen. Ein geringerer Abstand stellt eine stärkere viskose Dämpfung dar, so dass das Fabry-Perot-Filter größere Belastungen aus Schock und Vibrationen aushalten kann, ohne dass die Reflektorträger 12, 22 herausbrechen.

In den Fig. 1 und 4 sind Blenden 42 bzw. 42' an unterschiedlichen Positionen angeordnet. Es ist für Fachleute klar, dass eine Blende an einem beliebigen oder mehreren der Reflektoren bzw. Antireflexionsschichten 34 bis 40 vorgesehen sein kann. Bei Ausführungsbeispielen der Erfindung kann die Blende 42 bzw. 42' in einem Arbeitsschritt mit den Elektroden oder Anschlusskontakten hergestellt werden. Die Elektroden, Anschlusskontakte sowie die Blende können aus Aluminium bestehen.

An dieser Stelle sei ferner ausgeführt, dass die Figuren nicht maßstabsgetreu sind, wobei in den Fig. 1 und 3 die Antireflexionsschicht 38 im Vergleich zu den Fig. 2 und 4 vergrößert dargestellt ist. Bei Ausführungsbeispielen der Erfindung sind die Reflektoren und die Antireflexionsschichten in Projektion deckungsgleich ausgebildet.

Bei dem in den Fig. 3 und Fig. 4 gezeigten Beispiel wird das Gebiet der Reflektoren nicht mit in die Betätigung einbezogen, so dass der Abstand zwischen den Reflektoren frei gewählt werden kann. Ein entsprechender Entwurf ist somit auch für andere Reflektordesigns auf Basis dielektrischer Schichten verwendbar.

Da bei Ausführungsbeispielen der Erfindung beide Reflektorträger 12, 22 betätigt bzw. aktiviert werden, verringert sich bei gleichem Stellweg die Ansteuerspannung wesentlich gegenüber einem Design mit nur einem beweglichen Reflektorträger.

Ausführungsbeispiele der Erfindung schaffen somit ein elektrostatisch durchstimmbares Fabry-Perot-Filter, das in Volumenmikromechanik hergestellt ist. Ausführungsbeispiele der Erfindung sind für den mittleren und langwelligen Infrarotbereich geeignet. Bei Ausführungsbeispielen der Erfindung können die Reflektoren durch Bragg-Reflektoren implementiert sein, die für einen mittleren und langwelligeren Infrarotbereich einsetzbar sind. Die Antireflexionsschichten können für einen entsprechenden Wellenlängenbereich angepasst sein. Bei Ausführungsbeispielen der Erfindung ist ein veränderbarer Spiegelabstand, der zur Implementierung eines durchstimmbaren Fabry-Pérot-Filters erforderlich ist, durch zwei bewegliche Reflektoren implementiert. Dadurch kann ein Ausgleich des Schwerefeldes sowie von Vibrationen und Stößen erfolgen. Bei Ausführungsbeispielen der Erfindung sind die Reflektoren zusammen auslenkbar, während bei anderen Ausführungsbeispielen die Reflektoren, die den Abstand und damit die Transmissionswellenlänge definieren, separat auslenkbar sind. Ausführungsbeispiele der Erfindung sind für Wellenlängebereiche größer als 8 µm geeignet.

Ausführungsbeispiele der Erfindung weisen zwei dicke bewegliche Reflektorträger in Volumenmikromechanik auf, was eine geringe Verwölbung im ausgelenkten Zustand zur Folge hat. Ausführungsbeispiele der Erfindung bestehen aus maximal zwei verbundenen Wafern, was einen geringeren technologischen Aufwand zur Folge hat. Bei Ausführungsbeispielen der Erfindung ermöglicht der Aufbau unter Verwendung zweier Volumenmikromechanisch gefertigter Reflektorträger die Beschichtung der einander zugewandten Seiten der Reflektorträger mit variablen Reflektormaterialien. Bei Ausführungsbeispielen der Erfindung können die Reflektorträger eine rechteckförmige Projektion aufweisen, wobei Fachleuten jedoch klar ist, dass die Reflektorträger auch andersförmige Projektionen (das heißt Umfangsformen in Draufsicht) aufweisen können, die in einem Winkel zueinander angeordnet werden können, so dass Bereiche des ersten Reflektorträgers Bereichen des zweiten Trägerrahmens gegenüberliegen und Bereiche des zweiten Reflektorträgers Bereichen des ersten Trägerrahmens gegenüberliegen. Bei Ausführungsbeispielen der Erfindung sind die überlappenden Bereiche, in denen der erste und der zweite Reflektor sich gegenüberliegen, zentriert bzgl. des ersten Reflektorträgers und des zweiten Reflektorträgers angeordnet, so dass auf beiden Seiten entsprechende überlappende Bereiche zwischen Reflektorträger und jeweiligen Trägerahmen vorliegen. Bei Ausführungsbeispielen der Erfindung können die beiden Reflektorträger um 90° versetzt zueinander angeordnet sein. Bei Ausführungsbeispielen kann die Überlappung zwischen Reflektorträgern und Trägerrahmen zur Einstellung einer viskosen Dämpfung, durch die eine Schock- und Vibrationssicherheit erhöht werden kann, genutzt werden.

Bei Ausführungsbeispielen der Erfindung sind bewegliche Teile durch die Masse der Reflektorträger sowie die Federelemente definiert. Bei Ausführungsbeispielen der Erfindung befinden sich die Federelemente nahe an den Ecken und können, wie in den Figuren dargestellt ist, meanderförmig ausgeführt sein und sich um die Ecken herum erstrecken, so dass sie auf Biege- und Torsionsbelastung nachgiebig in alle Richtungen sind.

Anschläge, siehe 26 und 28 bei den beschriebenen Ausführungsbeispielen, können zur Begrenzung der Auslenkung in x- und y-Richtung, das heißt in der Chip- bzw. Waferebene, vorgesehen sein. Diese Anschläge können elastisch ausgeführt sein, um hohe Stoßbelastungen in der Waferebene zu absorbieren bzw. kurzfristig aufzunehmen.

Zur Änderung des Abstands zwischen den Reflektoren, die die Durchlasswellenlänge bestimmen, können Spannungen zwischen den Trägern und/oder zwischen einem Träger und einem gegenüberliegenden Trägerrahmen angelegt werden, so dass sich die Träger aufeinander zu bewegen. Reflektorträger und Trägerrahmen können dabei aus einem leitfähigen Material, wie z. B. Silizium bestehen. Bei alternativen Ausführungsbeispielen können zusätzliche Elektroden auf den Trägerahmen und/oder den Reflektorträgern vorgesehen sein. Die Verstellung der beiden Reflektorträger erfolgt bei Ausführungsbeispielen der Erfindung elektrostatisch, wobei ein Antrieb durch elektrostatische Aktuierung zwischen den beiden Reflektorträgern (insbesondere Fig. 1 und 2) oder alternativ durch eine elektrostatische Aktuierung zwischen gegenüberliegenden Trägerrahmen und Reflektorträgern mit Elektroden (Fig. 3 und 4) erfolgen kann. Dadurch ermöglichen Ausführungsbeispiele der Erfindung deutlich niedrigere Betätigungsspannungen als bekannte Entwürfe, die nur einen beweglichen Träger aufweisen. Diesbezüglich können Ausführungsbeispiele der Erfindung mit einer Betätigungsspannung von 50 Volt auskommen, verglichen mit Betätigungsspannungen von 100 Volt, bei nur einem beweglichen Träger. Solche geringe Betätigungsspannungen sind insbesondere beim Einsatz in der Medizintechnik vorteilhaft. Bei Ausführungsbeispielen der Erfindung sind die Abstände zwischen Elektrodengebieten, in denen die Betätigung erfolgt, und den Reflektoren, beispielsweise Bragg-Reflektoren, verschieden. Dämpferflächen können zwischen Reflektorträgern und Trägerrahmen angeordnet sein, so dass durch eine Einstellung des Abstands eine gezielte Veränderung der viskosen Dämpfung erreicht werden kann.

Bei Ausführungsbeispielen der Erfindung können zwei separat ansteuerbare Elektroden zur Betätigung jedes Reflektorträgers vorgesehen sein, siehe beispielsweise die Elektroden 70a und 70b für den Reflektorträger 12 und die Elektroden 70c und 70d für den Reflektorträger 22. Dadurch können, beispielsweise herstellungsbedingte, Verkippungen der Träger zueinander ausgeglichen werden. Ein solcher Ausgleich kann beispielsweise durch eine kapazitive Detektion und einen entsprechenden Regelkreis implementiert werden.

Bei Ausführungsbeispielen der Erfindung ist auf mindestens einem der beiden Reflektorträger eine optische Blende aufgebracht, die aus Aluminium bestehen kann. Bei Ausführungsbeispielen der Erfindung können die dielektrischen Schichtstapel, die die Reflektoren bilden, ein schmalbandiges Filter auf der Basis eines Fabry-Perot-Filters mit Dualband-Charakteristik realisieren. Sollen die Reflektoren zur Betätigung beitragen, kann die oberste Schicht derselben aus leitfähigen Germanium bestehen, und mit dem Reflektorträger bzw. Trägerrahmen, die beispielsweise aus Silizium bestehen können, leitfähig verbunden sein.

Ausführungsbeispiele der vorliegenden Erfindung schaffen somit ein abstimmbares Fabry-Perot-Filter, bei dem durch einen ersten und einen zweiten Reflektor ein optischer Resonator entsteht, dessen Zentralwellenlänge durch Einstellen des Abstands zwischen den Reflektoren einstellbar ist.

Bei Ausführungsbeispielen zum Herstellen eines abstimmen Fabry-Pérot-Filters werden jeweils zwei Siliziumschichten strukturiert und miteinander verbunden, um ein Filter herzustellen. Die Siliziumsubstrate können als Wafer vorliegen, die zunächst strukturiert und bearbeitet werden, dann verbunden werden und nachfolgend durch Sägen zu Chips vereinzelt werden. In den Wafern kann somit eine große Anzahl der Strukturen parallel erzeugt werden, wobei jeder Wafer Oberteile (erste Teile) oder Unterteile (zweite Teile) enthält.

Zur Herstellung der Strukturen können dabei durch nasschemische Ätzschritte von beiden Seiten die Konturen erzeugt werden, die die Reflektorträger von den Trägerrahmen trennen. Wie beispielsweise in den Fig. 2 und 4 zu entnehmen ist, erfolgen dieses nasschemische Ätzen symmetrisch von beiden Seiten bis zu einer Tiefe, die die Dicke der Federn, über die der Reflektorträger an den Trägerrahmenfedern gelagert ist, und die Dicke der optionalen Anschläge festlegt. Ferner kann ein nasschemisches Ätzen der Bereiche der Reflektorträger erfolgen, die nach dem Verbinden dem anderen Substrat gegenüberliegen, wie beispielsweise durch die Vorsprünge 62 in Fig. 2 gezeigt ist. In die Reflektorträger können Gruben für die Reflektoren nasschemisch eingeätzt werden, siehe beispielsweise die Ausnehmungen 60 in den Fig. 2 und 4.

Die Konturen der Federn sowie der Anschläge, wie sie beispielsweise in den Fig. 1 und 3 gezeigt sind, können durch einen Trockenätzschritt erzeugt werden. Die Reflektoren können in den vorgesehenen Gruben abgeschieden werden, wobei zu diesem Zweck auf für Fachleuten bekannte Art und Weise eine Sprühbelackung und Tiefenlithographie verwendet werden kann. Nachfolgend können die beiden Schichten durch Silizium-Direktbonden in einem Niedertemperaturbereich mittels der Trägerrahmen miteinander verbunden werden, wobei eine Isolation zwischen den Schichten durch einen Siliziumoxidschicht implementiert werden kann. Alternativ könnten die beiden Schichten auch durch andere Verbindungsverfahren mit exakt definierten Bond-Verbindungsschichten miteinander verbunden werden, beispielsweise durch Titan-Silizium-Bonden oder durch Verbinden mittels eines isolierenden Haftmittels.

Ausführungsbeispiele der Erfindung schaffen somit ein einfaches Herstellungsverfahren für ein abstimmbares Fabry-Perot-Filter, bei dem durch Rückätzen von Reflektorträgern und Verbinden zweier Substrate ein optischer Resonator entstehen kann. Bei Ausführungsbeispielen kann der Herstellungsprozess durch eine einfache Kombination aus zweifachem Nassätzen und Trockenätzen implementiert sein.

Ausführungsbeispiele der Erfindung wurden anhand einer Implementierung durch strukturierte Siliziumschichten erläutert. Es ist für Fachleute jedoch offensichtlich, dass alternative Ausführungsbeispiele der Erfindung in anderen Materialien mit geeigneten Eigenschaften implementiert sein können. Bei Ausführungsbeispielen der Erfindung sind Anschlusskontakte, Durchkontaktierungen und Elektroden in Aluminium ausgeführt. Bei alternativen Ausführungsbeispielen können andere Metalle verwendet werden. Ausführungsbeispiele der Erfindung besitzen ein symmetrisches Design, was bedeutet, dass die verbundenen Substrate hinsichtlich der Strukturierungen bezüglich Reflektorträger und Trägerrahmen im wesentlichen identisch strukturiert sein können.

## Patentansprüche

1. Abstimmbares Fabry-Perot-Filter, mit folgenden Merkmalen :
einem ersten Teil (10), das einen ersten Reflektorträger mit einem ersten Reflektor (34) und einen ersten Trägerrahmen (14), an dem der erste Reflektorträgern (12) federnd gelagert ist, aufweist;
einem zweiten Teil (20), das einen zweiten Reflektorträger (22) mit einem zweiten Reflektor (36) und einen zweiten Trägerrahmen (24), an dem der zweite Reflektorträger (22) federnd gelagert ist, aufweist;
wobei das erste Teil (10) und das zweite Teil (20) derart miteinander verbunden sind, dass sich der erste Reflektor (34) und der zweite Reflektor (36) gegenüberliegen und dass der Abstand zwischen dem ersten Reflektor (34) und dem zweiten Reflektor (36) veränderlich ist,
wobei der erste Reflektorträger (12) und der zweite Reflektorträgern (22) jeweils eine längliche Form aufweisen, und in einem Winkel zueinander angeordnet sind, so dass sich in einem Bereich, in dem die länglichen Reflektorträger (12, 22) überlappen, die Reflektoren (34, 36) gegenüberliegen,
wobei Bereiche des ersten Reflektorträgers (12) mit Bereichen des zweiten Trägerrahmens (24) überlappen und wobei Bereiche des zweiten Reflektorträgers (22) mit Bereichen des ersten Trägerrahmens (14) überlappen

2. Abstimmbares Fabry-Pérot-Filter nach Anspruch 1, bei dem jedes des ersten Teils (10) und des zweiten Teils (20) eine Halbleiterschicht aufweist, die strukturiert ist, um den Reflektorträger (12, 22), den Trägerrahmen (14, 24) und Federelemente (30), durch die der Reflektorträger (12, 22) an dem Trägerrahmen (14, 24) gelagert ist, zu definieren.

3. Abstimmbares Fabry-Pérot-Filter nach Anspruch 1 oder 2, bei dem eine Dicke der Reflektorträger (12, 22) mindestens 100 µm, mindestens 200 µm oder mindestens 280 µm beträgt.

4. Abstimmbares Fabry-Pérot-Filter nach einem der Ansprüche 1 bis 3, bei dem die länglichen Reflektorträger (12; 22) derart relativ zueinander angeordnet sind, dass ein zentraler Bereich des ersten Reflektorträgers (12) einen zentralen Bereich des zweiten Reflektorträgers (22) überlappt, während Bereiche auf beiden Seiten der zentralen Bereiche der Reflektorträger (12; 22) jeweils Bereichen der Trägerrahmen (14; 24) gegenüberliegen.

5. Abstimmbares Fabry-Pérot-Filter nach einem der Ansprüche 1 bis 4, bei dem in den sich gegenüberliegenden Bereichen Dämpfungsabschnitte (72, 90) gebildet sind, in denen ein Abstand der sich gegenüberliegenden Bereiche geringer ist als in anderen Abschnitten der sich gegenüberliegenden Bereiche.

6. Abstimmbares Fabry-Perot-Filter nach Anspruch 5, bei dem die Dämpfungsabschnitte durch Erhöhungen (90) der Trägerrahmen und/oder der Reflektorträger gebildet sind.

7. Abstimmbares Fabry-Perot-Filter nach Anspruch 5 oder Anspruch 6, bei dem die Dämpfungsabschnitte ein dielektrisches Material (72), das auf die Trägerrahmen (14, 24) und/oder die Reflektorträger (12, 22) aufgebracht ist, aufweisen.

8. Abstimmbares Fabry-Perot-Filter nach einem der Ansprüche 1 bis 7, das Mittel zum Anlegen einer Spannung zwischen dem ersten Teil (10) und dem zweiten Teil (20) aufweist, so dass ein Abstand zwischen den Reflektoren (34, 36) durch elektrostatische Anziehungskräfte veränderbar ist.

9. Abstimmbares Fabry-Perot-Filter nach Anspruch 8, bei dem das erste Teil (10) und das zweite Teil (20) aus einem leitfähigen Material gebildet sind, so dass bei Anlegen einer Spannung zwischen denselben eine elektrostatische Anziehung zwischen sich gegenüberliegenden Abschnitten des ersten Teils (10) und des zweiten Teils (20) erfolgt.

10. Abstimmbares Fabry-Perot-Filter nach Anspruch 8, bei dem in Bereichen, in denen sich der erste Trägerrahmen (14) und der zweite Reflektorträger (22) gegenüberliegen, Elektroden (70c, 70d) auf dem ersten Trägerrahmen (14) und/oder dem zweiten Reflektorträger (22) gebildet sind, und bei dem in Bereichen, in denen sich der zweite Trägerrahmen (24) und der erste Reflektorträger (12) gegenüberliegen, Elektroden (70a, 70b) auf dem zweiten Trägerrahmen (24) und/oder dem ersten Reflektorträger (12) gebildet sind, wobei die Mittel zum Anlegen einer Spannung ausgelegt sind, um eine Spannung zwischen den jeweiligen Elektroden (70a bis 70d) eines Teils (10, 20) und gegenüberliegenden Bereichen des anderen Teils (10, 20) anzulegen.

11. Abstimmbares Fabry-Perot-Filter nach Anspruch 8 oder 10, das jeweils zumindest zwei separate Elektroden (70a bis 70d) zum Anlegen einer Spannung zwischen dem ersten Reflektorträger (12) und dem zweiten Trägerrahmen (24) und/oder zwischen dem zweiten Reflektorträger (22) und dem ersten Trägerrahmen (14) aufweist, die separat ansteuerbar sind, um durch Anlegen unterschiedlicher Spannungen eine Verkippung der Reflektorträger (12, 22) relativ zueinander kompensieren zu können.

12. Abstimmbares Fabry-Perot-Filter nach einem der Ansprüche 1 bis 11, bei dem der erste Reflektorträger (12, 22) eine Ausnehmung (60) aufweist, in der der erste Reflektor (34, 36) angeordnet ist, und/oder der zweite Reflektorträger (12, 22) eine Ausnehmung (60) aufweist, in der der zweite Reflektor (34, 36) angeordnet ist.

13. Abstimmbares Fabry-Pérot-Filter nach einem der Ansprüche 1 bis 12, bei dem das erste und/oder das zweite Teil (10, 20) Anschläge (26, 28) zwischen dem Reflektorträger (12, 22) und dem Trägerrahmen (14, 24) aufweist, die ausgebildet sind, um eine Bewegung des Reflektorträgern (12, 22) in einer Richtung senkrecht zu einer Richtung einer Bewegung, durch die der Abstand zwischen dem ersten Reflektor (34) und dem zweiten Reflektor (36) verändert wird, zu beschränken.

14. Abstimmbares Fabry-Pérot-Filter nach Anspruch 13, bei dem die Anschläge (26, 28) elastisch ausgeführt sind, um Energie durch elastische Verformung aufnehmen zu können.

15. Fabry-Pérot-Filter nach einem der Ansprüche 1 bis 14, bei dem das erste Teil (10) und das zweite Teil (20) strukturierte Siliziumschichten sind, die an den Trägerrahmen (14, 24) miteinander verbunden sind.

16. Abstimmbares Fabry-Perot-Filter nach einem der Ansprüche 1 bis 15, bei dem Federelemente 30, durch die der erste Reflektorträger (12) an dem ersten Trägerrahmen (14) und/oder der zweite Reflektorträger (22) an dem zweiten Trägerrahmen (24) federnd gelagert sind, im Bereich von Ecken der länglichen Reflektorträger (12, 22) angeordnet sind, oder um Ecken der länglichen Reflektorträger (12, 22) herum angeordnet sind.

17. Abstimmbares Fabry-Perot-Filter nach einem der Ansprüche 1 bis 16, bei dem eine erste Antireflexionsschicht (38) gegenüber dem ersten Reflektor (34) auf einer Oberfläche des ersten Reflektorträgers (12) angeordnet ist, die einer Oberfläche, auf der der erste Reflektor (34) angeordnet ist, gegenüberliegt, und/oder bei dem eine zweite Antireflexionsschicht (40) gegenüber dem zweiten Reflektor (36) auf einer Oberfläche des zweiten Reflektorträgers (22) angeordnet ist, die einer Oberfläche, auf der der zweite Reflektor 36 angeordnet ist, gegenüberliegt.

18. Abstimmbares Fabry-Perot-Filter nach einem der Ansprüche 1 bis 17, bei dem eine Einlassblende (42, 42') auf einer Oberfläche des ersten oder zweiten Reflektorträgers gebildet ist.

19. Verfahren zum Herstellen eines abstimmbaren Fabry-Pérot-Filters, mit folgenden Schritten:
Strukturieren einer ersten Schicht zum Erzeugen eines ersten Teils (10), das einen ersten länglichen Reflektorträger (12), der an einem ersten Trägerrahmen (14) federnd gelagert ist, aufweist;
Strukturieren einer zweiten Schicht zum Erzeugen eines zweiten Teils (20), das einen zweiten länglichen Reflektorträger (22), der an einem zweiten Trägerrahmen (24) federnd gelagert ist, aufweist;
Aufbringen eines ersten Reflektors (34) auf den ersten Reflektorträger (12);
Aufbringen eines zweiten Reflektors (36) auf den zweiten Reflektorträger (22);
Verbinden des ersten Teils (10) und des zweiten Teils (20) mittels des ersten und des zweiten Trägerrahmens (14, 24) derart, dass der erste und der zweite längliche Reflektorträger (12, 22) in einem Winkel zueinander angeordnet sind, und dass sich in einem Bereich, in dem der erste und der zweite Reflektorträger (12, 22) überlappen, die Reflektoren (34, 36) gegenüberliegen, wobei Bereiche des ersten Reflektorträgers (12) mit Bereichen des zweiten Trägerrahmens (24) überlappen und wobei Bereiche des zweiten Reflektorträgers (22) mit Bereichen des ersten Trägerrahmens (14) überlappen, und wobei der Abstand zwischen dem ersten Reflektor (34) und dem zweiten Reflektor (36) veränderlich ist.

20. Verfahren nach Anspruch 19, bei dem das Strukturieren ein Nassätzen in jede von sich gegenüberliegenden Oberflächen der ersten Schicht und der zweiten Schicht aufweist, um Konturen, die den Reflektorträger (12, 22) von dem Trägerrahmen (14, 24) trennen, zu bilden, und ein Trockenätzen in dem durch das Nassätzen erzeugten verdünnten Bereichen, um Federelemente (30), durch die der Reflektorträger (12, 22) an dem Trägerrahmen (14, 24) federnd gelagert ist, zu erzeugen.

21. Verfahren nach Anspruch 20, bei dem beim Trockenätzen ferner elektrische Anschläge (26, 28) zwischen dem Reflektorträger (12, 22) und dem Trägerrahmen (14, 24) erzeugt werden.

## Claims

1. Tunable Fabry-Pérot filter comprising:
a first part (10) comprising a first reflector carrier having a first reflector (34) and a first support frame (14) on which the first reflector carrier (12) is spring-mounted;
a first part (20) comprising a second reflector carrier (22) having a second reflector (36) and a second support frame (24) on which the second reflector carrier (22) is spring-mounted;
the first part (10) and the second part (20) being connected to each other such that the first reflector (34) and the second reflector (36) are located opposite each other and that the distance between the first reflector (34) and the second reflector (36) is variable,
the first reflector carrier (12) and the second reflector carrier (22) each having an oblong shape and being disposed at a mutual angle so that the reflectors (34, 36) are located opposite each other within an area wherein the oblong reflector carriers (12, 22) overlap,
wherein areas of the first reflector carrier (12) overlap with areas of the second support frame (24), and wherein areas of the second reflector carrier (22) overlap with areas of the first support frame (14).

2. Tunable Fabry-Pérot filter as claimed in claim 1, wherein each of said first part (10) and second part (20) comprises a semiconductor layer patterned to define the reflector carrier (12, 22), the support frame (14, 24) and spring elements (30) by means of which the reflector carrier (12, 22) is mounted on the support frame (14, 24).

3. Tunable Fabry-Pérot filter as claimed in claim 1 or 2, wherein a thickness of the reflector carriers (12, 22) is at least 100 µm, at least 200 µm, or at least 280 µm.

4. Tunable Fabry-Pérot filter as claimed in any of claims 1 to 3, wherein the oblong reflector carriers (12; 22) are disposed in relation to each other such that a central area of the first reflector carrier (12) overlaps a central area of the second reflector carrier (22), while areas on both sides of the central areas of the reflector carriers (12; 22) are located opposite areas of the support frames (14; 24), respectively.

5. Tunable Fabry-Pérot filter as claimed in any of claims 1 to 4, wherein areas located opposite one another have damping portions (72, 90) formed therein where a distance between the oppositely located areas is smaller than in other portions of the oppositely located areas.

6. Tunable Fabry-Pérot filter as claimed in claim 5, wherein the damping portions are formed by elevations (90) of the support frames and/or of the reflector carriers.

7. Tunable Fabry-Pérot filter as claimed in claim 5 or claim 6, wherein the damping portions comprise a dielectric material (72) applied to the support frames (14, 24) and/or the reflector carriers (12, 22).

8. Tunable Fabry-Pérot filter as claimed in any of claims 1 to 7, comprising means for applying a voltage between the first part (10) and the second part (20), so that a distance between the reflectors (34, 36) is variable by means of electrostatic attractive forces.

9. Tunable Fabry-Pérot filter as claimed in claim 8, wherein the first part (10) and the second part (20) are formed of a conductive material, so that upon application of a voltage between same, there will be an electrostatic attraction between oppositely located portions of the first part (10) and of the second part (20).

10. Tunable Fabry-Pérot filter as claimed in claim 8, wherein in areas wherein the first support frame (14) and the second reflector carrier (22) are located opposite each other, electrodes (70c, 70d) are formed on the first support frame (14) and/or on the second reflector carrier (22), and wherein in areas wherein the second support frame (24) and the first reflector carrier (12) are located opposite each other, electrodes (70a, 70b) are formed on the second support frame (24) and/or on the first reflector carrier (12), the means for applying a voltage being configured to apply a voltage between the respective electrodes (70a-70d) of a part (10, 20) and oppositely located areas of the other part (10, 20).

11. Tunable Fabry-Pérot filter as claimed in claim 8 or 10, comprising in each case at least two separate electrodes (70a-70d) for applying a voltage between the first reflector carrier (12) and the second support frame (24) and/or between the second reflector carrier (22) and the first support frame (14) which are controllable separately so as to be able to compensate for mutual tilting of the reflector carriers (12, 22) by applying different voltages.

12. Tunable Fabry-Pérot filter as claimed in any of claims 1 to 11, wherein the first reflector carrier (12, 22) comprises a recess (60) which has the first reflector (34, 36) arranged therein, and/or the second reflector carrier (12, 22) comprises a recess (60) which has the second reflector (34, 36) arranged therein.

13. Tunable Fabry-Pérot filter as claimed in any of claims 1 to 12, wherein the first and/or second part(s) (10, 20) comprise(s) stops (26, 28) between the reflector carrier (12, 22) and the support frame (14, 24), said stops (26, 28) being configured to restrict a movement of the reflector carrier (12, 22) in a direction perpendicular to a direction of a movement which changes the distance between the first reflector (34) and the second reflector (36).

14. Tunable Fabry-Pérot filter as claimed in claim 13, wherein the stops (26, 28) are configured to be elastic so as to be able to absorb energy by means of elastic deformation.

15. Tunable Fabry-Pérot filter as claimed in any of claims 1 to 14, wherein the first part (10) and the second part (20) are patterned silicon layers which are interconnected at the support frames (14, 24).

16. Tunable Fabry-Pérot filter as claimed in any of claims 1 to 15, wherein spring elements (30), by means of which the first reflector carrier (12) is spring-mounted on the first support frame (14) and/or the second reflector carrier (22) is spring-mounted on the second support frame (24), are arranged in the area of corners of the oblong reflector carriers (12, 22) or are arranged around corners of the oblong reflector carriers (12, 22).

17. Tunable Fabry-Pérot filter as claimed in any of claims 1 to 16, wherein a first antireflection layer (38) is disposed, opposite the first reflector (34), on a surface of the first reflector carrier (12), said surface being located opposite a surface on which the first reflector (34) is arranged, and/or wherein a second antireflection layer (40) is disposed, opposite the second reflector (36), on a surface of the second reflector carrier (22), said surface being located opposite a surface on which the second reflector 36 is arranged.

18. Tunable Fabry-Pérot filter as claimed in any of claims 1 to 17, wherein an inlet aperture (42, 42') is formed on a surface of the first or second reflector carrier.

19. Method of producing a tunable Fabry-Pérot filter, comprising:
patterning a first layer for producing a first part (10) comprising a first oblong reflector carrier (22) sprint-mounted on a first support frame (14);
patterning a second layer for producing a second part (20) comprising a second oblong reflector carrier (22) spring-mounted on a second support frame (24);
applying a first reflector (34) onto the first reflector carrier (12);
applying a second reflector (36) onto the second reflector carrier (22);
connecting the first part (10) and the second part (20) by means of the first and second support frames (14, 24) such that the first and second oblong reflector carriers (12, 22) are arranged at a mutual angle and that the reflectors (34, 36) are located opposite each other within an area wherein the first and second reflector carriers (12, 22) overlap, wherein areas of the first reflector carrier (12) overlap with areas of the second support frame (24), and wherein areas of the second reflector carrier (22) overlap with areas of the first support frame (14)" and wherein the distance between the first reflector (34) and the second reflector (36) is variable.

20. Method as claimed in claim 19, wherein said patterning comprises wet etching into each of oppositely located surfaces of the first layer and of the second layer so as to form contours separating the reflector carrier (12, 22) from the support frame (14, 24), and dry etching in the thinned areas produced by said wet etching so as to produce spring elements (30) by means of which the reflector carrier (12, 22) is sprint-mounted on the support frame (14, 24).

21. Method as claimed in claim 20, wherein said dry etching further comprises producing electrical stops (26, 28) between the reflector carrier (12, 22) and the support frame (14, 24).

## Revendications

1. Filtre de Fabry-Pérot accordable, aux caractéristiques suivantes:
une première partie (10) présentant un premier porte-réflecteur avec un premier réflecteur (34) et un premier cadre de support (14) sur lequel le premier porte-réflecteur (12) est monté de manière élastique;
une deuxième partie (20) présentant un deuxième porte-réflecteur (22) avec un deuxième réflecteur (36) et un deuxième cadre de support (24) sur lequel le deuxième porte-réflecteur (22) est monté de manière élastique;
dans lequel la première partie (10) et la deuxième partie (20) sont connectées entre elles de sorte que le premier réflecteur (34) et le deuxième réflecteur (36) soient situés opposés l'un à l'autre et que la distance entre le premier réflecteur (34) et le deuxième réflecteur (36) soit variable,
dans lequel le premier porte-réflecteur (12) et le deuxième porte-réflecteur (22) présentent, chacun, une forme allongée et sont disposés selon un angle l'un par rapport à l'autre de sorte que les réflecteurs (34, 36) se trouvent opposés l'un à l'autre dans une zone dans laquelle les porte-réflecteur allongés (12, 22) viennent en recouvrement l'un avec l'autre,
dans lequel des zones du premier porte-réflecteur (12) viennent en recouvrement avec des zones du deuxième cadre de support (24) et des zones du deuxième porte-réflecteur (22) viennent en recouvrement avec des zones du premier cadre de support (14).

2. Filtre de Fabry-Pérot accordable selon la revendication 1, dans lequel chacune de la première partie (10) et de la deuxième partie (20) présente une couche semi-conductrice qui est structurée pour définir le porte-réflecteur (12, 22), le cadre de support (14, 24) et des éléments de ressort (30) par lesquels le porte-réflecteur (12, 22) est monté sur le cadre de support (14, 24).

3. Filtre de Fabry-Pérot accordable selon la revendication 1 ou 2, dans lequel une épaisseur des porte-réflecteur (12, 22) est d'au moins 100 µm, d'au moins 200 µm ou d'au moins 280 µm.

4. Filtre de Fabry-Pérot accordable selon l'une des revendications 1 à 3, dans lequel les porte-réflecteur allongés (12; 22) sont disposés l'un par rapport à l'autre de sorte qu'une zone centrale du premier porte-réflecteur (12) vienne en recouvrement avec une zone centrale du deuxième porte-réflecteur (22), tandis que des zones des deux côtés des zones centrales des porte-réflecteur (12; 22) se trouvent opposées, chacune, à des zones des cadres de support (14; 24).

5. Filtre de Fabry-Pérot accordable selon l'une des revendications 1 à 4, dans lequel, dans les zones opposées l'une à l'autre (72, 90) sont formés des segments d'atténuation dans lesquels une distance entre les zones opposées l'une à l'autre est plus petite que dans d'autres segments des zones situées opposées l'une à l'autre.

6. Filtre de Fabry-Pérot accordable selon la revendication 5, dans lequel les segments d'atténuation sont formées par des rehausses (90) des cadres de support et/ou des porte-réflecteur.

7. Filtre de Fabry-Pérot accordable selon la revendication 5 ou la revendication 6, dans lequel les segments d'atténuation présentent un matériau diélectrique (72) qui est appliqué sur les cadres de support (14, 24) et/ou les porte-réflecteur (12, 22).

8. Filtre accordable de Fabry-Pérot selon l'une des revendications 1 à 7, présentant des moyens pour appliquer une tension entre la première partie (10) et la deuxième partie (20), de sorte qu'une distance entre les réflecteurs (34, 36) soit variable par des forces d'attraction électrostatique.

9. Filtre de Fabry-Pérot accordable selon la revendication 8, dans lequel la première partie (10) et la deuxième partie (20) sont réalisées en un matériau conducteur, de sorte que, lors de l'application d'une tension entre ces dernières, se produise une attraction électrostatique entre des segments situés opposés l'un à l'autre de la première partie (10) et de la deuxième partie (20).

10. Filtre de Fabry-Pérot accordable selon la revendication 8, dans lequel, dans les zones dans lesquelles le premier cadre de support (14) et le deuxième porte-réflecteur (22) se trouvent opposés l'un à l'autre, des électrodes (70c, 70d) sont formées sur le premier cadre de support (14) et/ou sur le deuxième porte-réflecteur (22), et dans lequel, dans les zones dans lesquelles le deuxième cadre de support (24) et le premier porte-réflecteur (12) se trouvent opposés l'un à l'autre, des électrodes (70a, 70b) sont formées sur le deuxième cadre de support (24) et/ou sur le premier porte-réflecteur (12), les moyens pour appliquer une tension sont conçus pour appliquer une tension entre les électrodes respectives (70a à 70d) d'une partie (10, 20) et des zones opposées l'une à l'autre de l'autre partie (10, 20).

11. Filtre de Fabry-Pérot accordable selon la revendication 8 ou 10, présentant au moins deux électrodes séparées (70a à 70d) pour appliquer une tension entre le premier porte-réflecteur (12) et le deuxième cadre de support (24) et/ou entre le deuxième porte-réflecteur (22) et le premier cadre de support (14) qui peuvent être activées séparément pour pouvoir compenser, en appliquant des tensions différentes, un basculement des porte-réflecteur (12, 22) l'un par rapport à l'autre.

12. Filtre de Fabry-Pérot accordable selon l'une des revendications 1 à 11, dans lequel le premier porte-réflecteur (12, 22) présente un évidement (60) dans lequel est disposé le premier réflecteur (34, 36), et/ou le deuxième porte-réflecteur (12, 22) présente un évidement (60) dans lequel est disposé le deuxième réflecteur (34, 36).

13. Filtre de Fabry-Pérot accordable selon l'une des revendications 1 à 12, dans lequel la première et/ou la deuxième partie (10, 20) présente des butées (26, 28) entre le porte-réflecteur (12, 22) et le cadre de support (14, 24) qui sont réalisées pour limiter un mouvement du porte-réflecteur (12, 22) dans une direction perpendiculaire à une direction d'un mouvement par lequel est modifiée la distance entre le premier réflecteur (34) et le deuxième réflecteur (36).

14. Filtre de Fabry-Pérot accordable selon la revendication 13, dans lequel les butées (26, 28) sont réalisées élastiques pour pouvoir absorber de l'énergie par déformation élastique.

15. Filtre de Fabry-Pérot accordable selon l'une des revendications 1 à 14, dans lequel la première partie (10) et la deuxième partie (20) sont des couches de silicium structurées qui sont connectées l'une à l'autre sur les cadres de support (14, 24)

16. Filtre de Fabry-Pérot accordable selon l'une des revendications 1 à 15, dans lequel des éléments élastiques 30, par lesquels le premier porte-réflecteur (12) est monté de manière élastique sur le premier cadre de support (14) et/ou le deuxième porte-réflecteur (22) est monté de manière élastique sur le deuxième cadre de support (24), sont disposés à l'endroit de coins des porte-réflecteur allongés (12, 22), ou sont disposées autour de coins des porte-réflecteur allongés (12, 22).

17. Filtre de Fabry-Pérot accordable selon l'une des revendications 1 à 16, dans lequel une première couche anti-réflexion (38) est disposée opposée au premier réflecteur (34) sur une surface du premier porte-réflecteur (12) qui se situe opposée à une surface sur laquelle est disposé le premier réflecteur (34), et/ou dans lequel une deuxième couche anti-réflexion (40) est disposée opposée au deuxième réflecteur (36) sur une surface du deuxième porte-réflecteur (22) qui se situe opposée à une surface sur laquelle est disposé le deuxième réflecteur 36.

18. Filtre de Fabry-Pérot accordable selon l'une des revendications 1 à 17, dans lequel une ouverture d'entrée (42, 42') est formée sur une surface du premier ou du deuxième porte-réflecteur.

19. Procédé de fabrication d'un filtre de Fabry-Pérot accordable, aux étapes suivantes consistant à:
structurer une première couche pour générer une première partie (10) présentant un premier porte-réflecteur allongé (12) qui est monté de manière élastique sur un premier cadre de support (14);
structurer une deuxième couche pour générer une deuxième partie (20) présentant un deuxième porte-réflecteur allongé (22) qui est monté de manière élastique sur un deuxième cadre de support (24);
placer un premier réflecteur (34) sur le premier porte-réflecteur (12);
placer un deuxième réflecteur (36) sur le deuxième porte-réflecteur (22);
connecter la première partie (10) et la deuxième partie (20) au moyen du premier et du deuxième cadre de support (14, 24) de sorte que le premier et le deuxième porte-réflecteur allongé (12, 22) soient disposés selon un angle l'un par rapport à l'autre, et que, dans une zone dans laquelle le premier et le deuxième porte-réflecteur (12, 22) viennent en recouvrement, les réflecteurs (34, 36) se trouvent opposés l'un à l'autre, des zones du premier porte-réflecteur (12) venant en recouvrement avec des zones du deuxième cadre de support (24) et des zones du deuxième porteréflecteur (22) venant en recouvrement avec des zones du premier cadre de support (14), et la distance entre le premier réflecteur (34) et le deuxième réflecteur (36) étant variable.

20. Procédé selon la revendication 19, dans lequel la structuration présente une gravure en humide dans chacune des surfaces se trouvant opposées l'une à l'autre de la première couche et de la deuxième couche, pour former des contours qui séparent le porte-réflecteur (12, 22) du cadre de support (14, 24), et une gravure à sec dans les zones amincies générées par la gravure en humide pour générer des éléments de ressort (30) par lesquels le porte-réflecteur (12, 22) est monté de manière élastique sur le cadre de support (14, 24).

21. Procédé selon la revendication 20, dans lequel sont par ailleurs générées, lors de la gravure à sec, des butées électriques (26, 28) entre le porte-réflecteur (12, 22) et le cadre de support (14, 24).
